# EUROPÄISCHE PATENTSCHRIFT

(11) **EP 1 316 587 B1**
(45) Veröffentlichungstag und Bekanntmachung des Hinweises auf die Patenterteilung: **20.09.2006**
(21) Anmeldenummer: 02026569.0
(22) Anmeldetag: 28.11.2002
(51) Int. Cl.: C09B 67/22

(54) **Mischungen von faserreaktiven Bisazofarbstoffen und ihre Verwendung**
Mixtures of reactive disazo dyes and the use thereof
Mélanges de colorants disazoiques réactifs et leur utilisation

(30) Priorität: 01.12.2001 DE 10159085
(43) Veröffentlichungstag der Anmeldung: 04.06.2003
(73) Patentinhaber: DyStar Textilfarben GmbH & Co. Deutschland KG, 65926 Frankfurt am Main (DE)
(72) Erfinder: Eichhorn, Joachim, Dr., 65929 Frankfurt (DE); Mrotzeck, Uwe, Dr., 65779 Kelkheim (DE); Russ, Werner, Dr., 65439 Flörsheim-Wicker (DE)

(56) Entgegenhaltungen:
- EP-A- 0 668 328
- EP-A- 0 976 792
- EP-A- 1 134 260
- DE-C- 960 534
- GB-A- 2 029 437
- US-A- 6 126 700

## Beschreibung

Die Erfindung liegt auf dem technischen Gebiet der faserreaktiven Azofarbstoffe. Faserreaktive Disazofarbstoffe und deren Verwendung zum Färben von Hydroxy- und Carbonamidgruppen-haltigem Material in marineblauen Farbtönen sind zahlreich beschrieben und beispielsweise aus der U.S.-Patentschrift 2 657 205 und aus der japanischen Patentanmeldungs-Veröffentlichung Sho-58-160 362 sowie aus der U.S.-Patentschrift 4 257 770 bekannt.

Diese Farbstoffe besitzen jedoch teilweise gewisse anwendungstechnische Mängel, wie beispielsweise einen ungenügenden Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern) oder eine zu große Abhängigkeit der Farbausbeute von wechselnden Färbeparametern im Färbeprozeß. Darüber hinaus entsprechen einzelne Echtheiten der erhaltenen Färbungen, wie beispielsweise die Lichtechtheiten, zum Teil nicht mehr aktuellen Anforderungen.

Infolgedessen besteht weiterhin ein Bedarf nach neuen Reaktivfarbstoffen bzw. Mischungen mit verbesserten Eigenschaften, wie hohe Substantivität bei gleichzeitig guter Auswaschbarkeit von nicht fixierten Anteilen. Sie müssen darüberhinaus auch gute färberische Ausbeuten aufweisen und eine hohe Reaktivität besitzen, wobei insbesondere Färbungen mit hohen Fixiergraden und guter Lichtechtheit geliefert werden sollen.

Mit der vorliegenden Erfindung wurden nunmehr Farbstoffmischungen gefunden, die diese oben beschriebenen Eigenschaften in hohem Maße besitzen. Diese neuen Farbstoffmischungen zeichnen sich vor allem durch hohe Farbstärke, hohe Fixierausbeuten, gutes Aufbauverhalten und leichter Auswaschbarkeit der nicht auf der Faser fixierten Anteile aus. Zudem besitzen die Färbungen sehr gute Allgemeinechtheiten, wie hohe Lichtechtheit und gute Nassechtheiten.

Die Erfindung betrifft somit eine Reaktivfarbstoffmischung, die mindestens einen Farbstoff der allgemeinen Formel (Ia), 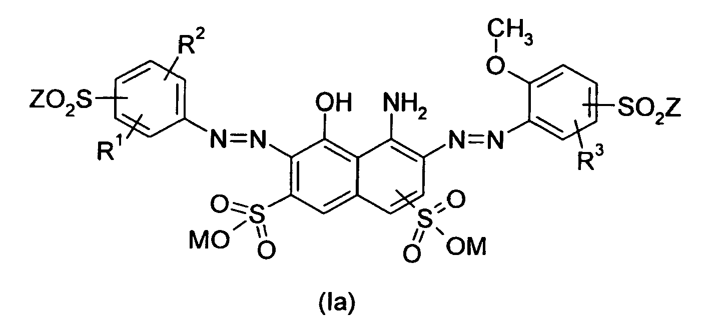 und mindestens einen Farbstoff der allgemeinen Formel (IIa) 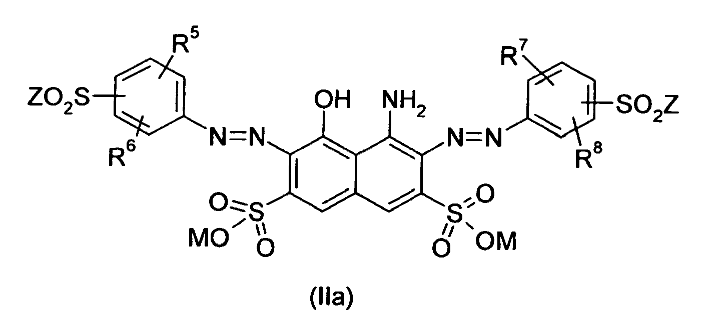 enthält, worin
R¹ bis R³ Methyl oder Methoxy;
R⁵ und R⁶ Wasserstoff, Methoxy oder Sulfo;
R⁷ und R⁸ Wasserstoff;
Z Vinyl oder β-Sulfatoethyl; und
M Wasserstoff, ein Alkalimetall oder ein Äquivalent eines Erdalkalimetalls
bedeuten.

Die Gruppen "Sulfo" und "Sulfato" schließen sowohl deren Säureform als auch deren Salzform ein. Demgemäß bedeuten Sulfogruppen Gruppen entsprechend der allgemeinen Formel -SO₃M und Sulfatogruppen Gruppen entsprechend der allgemeinen Formel -OSO₃M, jeweils mit M der obengenannten Bedeutung.

In den Farbstoffen der allgemeinen Formeln (Ia) und (IIa) können die faserreaktiven Gruppen -SO₂Z zum einen Vinylsulfonylgruppen und zum anderen β-Sulfatoethylsulfonyl-Gruppen, bedeuten. Enthalten die Farbstoffe der allgemeinen Formeln (Ia) und (IIa) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

In der allgemeinen Formel (IIa) stehen die Reste R⁵ bis R⁸ besonders bevorzugt für Wasserstoff.

Die erfindungsgemäßen Farbstoffmischungen enthalten Bisazofarbstoffe der allgemeinen Formel (Ia) in einer Menge von 5 bis 95 Gew-%, bevorzugt 10 bis 90 Gew-% und Bisazofarbstoffe der allgemeinen Formel (IIa) in einer Menge von 5 bis 95 Gew-%, bevorzugt 10 bis 90 Gew-%.

Optional können die erfindungsgemäßen Farbstoff-Mischungen außerdem einen oder mehrere Monoazofarbstoffe der allgemeinen Formeln (1) oder (2) in einer Menge bis zu 10 Gew % enthalten, 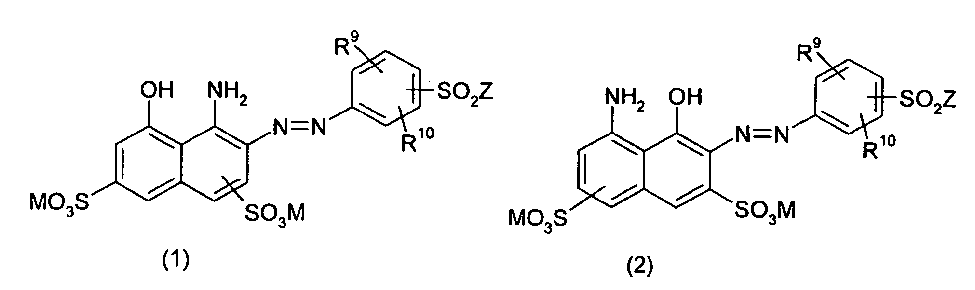 worin M die obengenannten Bedeutungen besitzt,
Z -CH₂CH₂Z¹ oder -CH=CH₂ bedeutet, worin Z¹ für eine unter Alkaliwirkung abspaltbare Gruppe oder Hydroxy steht;
R⁹ und R¹⁰ unabhängig voneinander Wasserstoff, (C₁-C₄)-Alkyl, (C₁-C₄)-Alkoxy, Hydroxy, Sulfo, Carboxy, Cyano, Nitro oder Halogen sind.

Besonders bevorzugt sind R⁹ und R¹⁰ Wasserstoff, Methyl, Methoxy oder Sulfo und Z ist besonders bevorzugt Vinyl oder β-Sulfatoethyl.

Farbstoffe der allgemeinen Formeln (1) und (2) sind über Standardsynthesemethoden zugänglich oder werden teilweise während der Synthese von Farbstoffen der allgemeinen Formel (Ia) und (IIa) gebildet. Sie werden üblicherweise als Nuancierkomponenten eingesetzt.

Die erfindungsgemäßen Mischungen von Farbstoffen der allgemeinen Formel (la) und (IIa) können als Präparation in fester oder in flüssiger (gelöster) Form vorliegen. In fester Form enthalten sie so weit erforderlich die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoff-Mischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen sind die Farbstoffe der allgemeinen Formeln (Ia) und (IIa) zu 20 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoff-Mischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt bis zu 20 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazokomponenten und 1-Amino-8-hydroxy-naphthalin-3,6-disulfonsäure oder 1-Amino-8-hydroxy-naphthalin-4,6-disulfonsäure als Kupplungskomponenten in den gewünschten Mengenverhältnissen.
Beispielsweise kann die erfindungsgemäße Farbstoffmischung, wenn in den Diazokomponenten die Gruppen R¹ und R⁵ sowie R² und R⁶ gemäß den allgemeinen Formeln (Ia) und (IIa) gleiche Bedeutung besitzen, hergestellt werden, indem man eine Mischung von Aminen der allgemeinen Formeln (3a) und (3b) 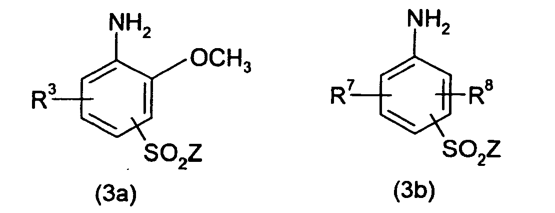 worin R³, R⁷, R⁸ und Z wie oben angegeben definiert sind, in üblicher Weise in saurem Medium diazotiert und die erhaltene Mischung der Diazoniumverbindungen auf 1-Amino-8-hydroxy-naphthalin-3,6-disulfonsäure bei einem pH-Wert unterhalb von 2 in erster Stufe zu einer Mischung von Monoazofarbstoffen kuppelt und anschließend ein Amin der allgemeinen Formel (3c) 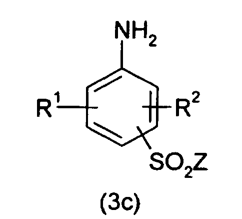 worin R¹, R² und Z wie angegeben definiert sind, in üblicher Weise diazotiert und die erhaltene Diazoniumverbindung bei einem pH-Wert zwischen 3 und 8 mit der zuvor in erster Stufe erhaltenen Mischung von Monoazoverbindungen umsetzt.

Die erfindungsgemäßen Farbstoffe werden in an und für sich bekannter Weise durch Aussalzen beispielsweise mit Kochsalz oder Kaliumchlorid oder durch Sprühtrocknung isoliert.

Es können auch die bei der Synthese der Farbstoffe der allgemeinen Formel (la) und (IIa) anfallende Lösungen, ggf. nach Zusatz einer Puffersubstanz und ggf. nach Konzentrierung, direkt als Flüssigpräparationen der färberischen Verwendung zugeführt werden.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man die erfindungsgemäßen Farbstoffmischungen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie bspw. in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke aus.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine sehr gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen.

Die erfindungsgemäßen Farbstoffmischungen liefern auf den genannten Materialien, bevorzugt Fasermaterialien, marineblaue bis grüne Färbungen mit sehr guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

70 Teile eines elektrolythaltigen Farbstoffpulvers, das den grünstichig marineblauen Disazofarbstoff der Formel (IA) 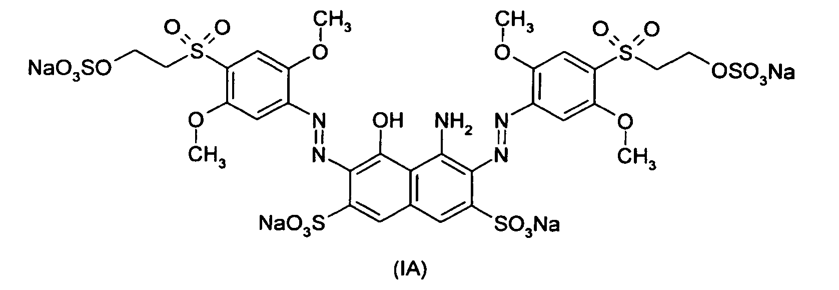 in 70%-igem Anteil enthält und 30 Teile eines elektrolythaltigen Farbstoffpulvers, das den marineblauen Disazofarbstoff der Formel (IIA) in 75%-igem Anteil enthält, werden mechanisch miteinander gemischt.

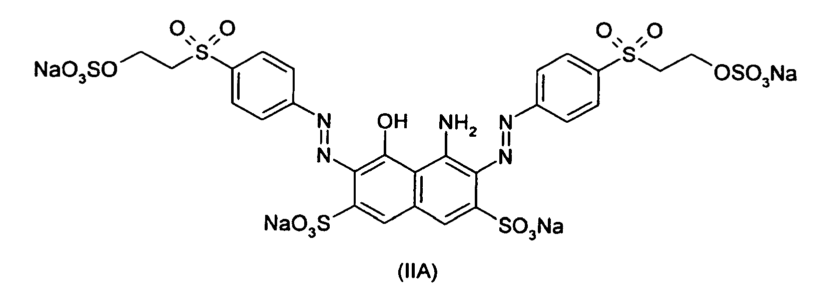

Die resultierende, erfindungsgemäße Farbstoffmischung liefert unter den für Reaktivfarbstoffe üblichen Färbebedingungen, beispielsweise auf Baumwolle, farbstarke, grünstichig marineblaue Färbungen und Drucke.

### Beispiel 2

60 Teile eines elektrolythaltigen Farbstoffpulvers, das den grünstichig marineblauen Disazofarbstoff der Formel (IA) in 70%-igem Anteil enthält und 40 Teile eines elektrolythaltigen Farbstoffpulvers, das den marineblauen Disazofarbstoff der Formel (IIB) 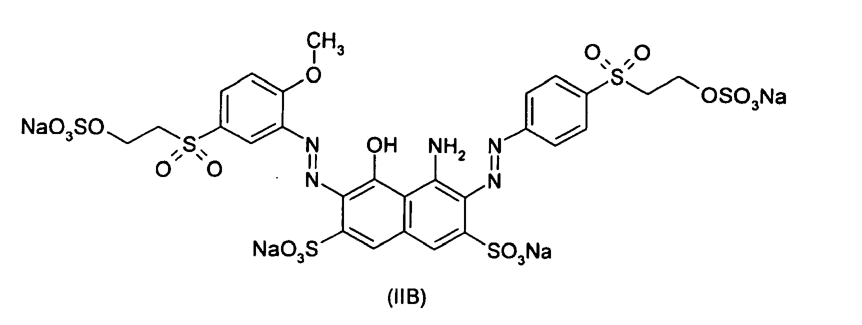 in 75%-igem Anteil enthält, werden in 500 Teilen Wasser gelöst und die erhaltene Farbstofflösung auf pH 5.5-6 eingestellt. Durch Eindampfen dieser Farbstofflösung erhält man eine Farbstoffmischung, die auf Baumwolle unter den für Reaktivfarbstoffe üblichen Färbebedingungen farbstarke, grünstichig marineblaue Färbungen und Drucke liefert.

### Beispiel 3

a) Eine Mischung aus 141 Teilen 4-(β-Sulfatoethylsulfonyl)-anilin und 171 Teilen 2,5-Dimethoxy-4-(β-sulfatoethylsulfonyl)-anilin wird diazotiert. Hierzu gibt man 159 Teile 1-Amino-8-naphthol-3,6-disulfonsäure sowie 159 Teile 1-Amino-8-naphthol-4,6-disulfonsäure und kuppelt in erster Stufe bei pH 1 bis 1.3 unterhalb 20°C zu einer Mischung roter Monoazofarbstoffe gemäß allgemeiner Formel (1). Der angegebene pH-Bereich wird dabei mittels Natriumhydrogencarbonat eingestellt und während der Kupplungsreaktion gehalten.
b) In einem zweiten, separaten Reaktionsgefäß werden 341 Teile 2,5-Dimethoxy-4-(β-sulfatoethylsulfonyl)-anilin in 1000 Teilen Eiswasser und 180 Teilen 30%-iger Salzsäure suspendiert und durch Zutropfen von 175 Teilen 40%-iger Natriumnitritlösung diazotiert. Nach ca. 2-stündiger Nachrührzeit bei 10-15°C wird der Nitritüberschuß mit Amidosulfonsäure zurückgenommen und die erhaltene Diazo-Suspension zur Mischung der roten Monoazofarbstoffe aus a) gepumpt. Anschließend wird unterhalb 25°C mit Natriumcarbonat pH 5 - 6 eingestellt und die nach beendeter Kupplungsreaktion entstandene 26 : 26 : 24 : 24 - Mischung der vier Disazo-Farbstoffe (IA), (IAA), (IID) und (IIAF) durch Sprühtrocknung isoliert.
   Die erhaltene, erfindungsgemäße Farbstoffmischung färbt Baumwolle in grünstichig marineblauen Tönen.

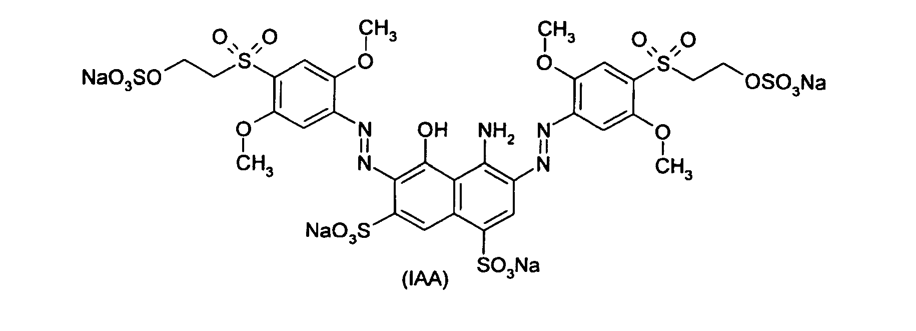

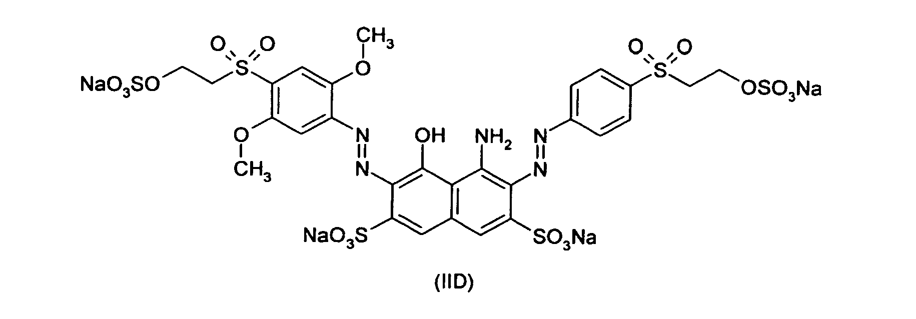

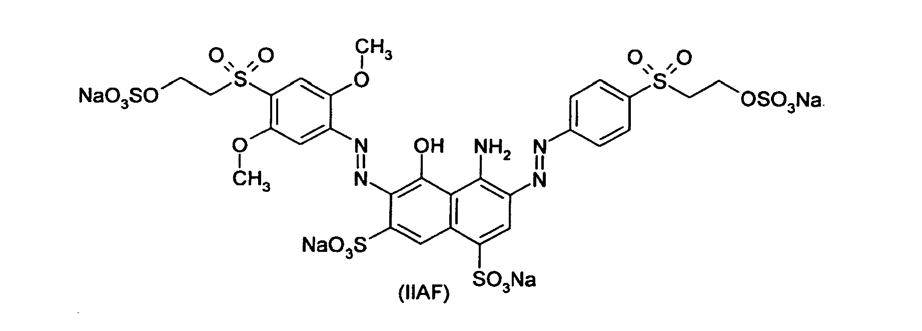

### Beispiele 4 bis 35

Die nachfolgenden Tabellenbeispiele beschreiben weitere erfindungsgemäße Mischungen der Farbstoffe der allgemeinen Formeln (Ia) und (IIa), die jeweils in Form des Natriumsalzes angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, marineblaue bzw. grünstichig marineblaue Färbungen.

### Farbstoff-Mischungen gemäß Beispiel 1 oder 2

| Bsp. | Farbstoff gemäß der allgemeinen Formel (I) | Farbstoff gemäß der allgemeinen Formel (II) | Verhältnis (I):(II) ; Farbton |
|---|---|---|---|
| 4 | (IA) | (IIA) | 15 : 85 |
| | | | marineblau |
| 5 | (IA) | (IIA) | 80 : 20 |
| | | | grünstichig |
| | | | marineblau |
| 6 | (IA) | (IIB) | 25 : 75 |
| | | | grünstichig |
| | | | marineblau |
| 8 | (IA) | 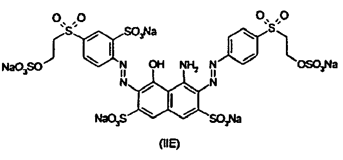 | 20 : 80 |
| | | | marineblau |
| 9 | (IA) | 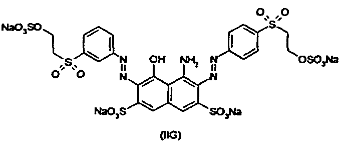 | 15:85 |
| | | | marineblau |
| 10 | (IA) | 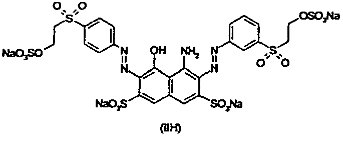 | 20 : 80 |
| | | | marineblau |
| 11 | (IA) | 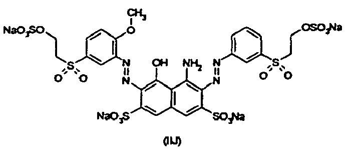 | 50 : 50 |
| | | | grünstichig |
| | | | marineblau |
| 12 | (IA) | 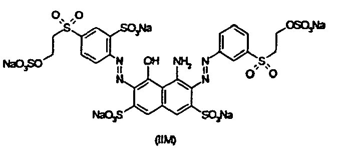 | 35 : 65 |
| | | | grünstichig |
| | | | marineblau |
| 13 | (IA) | 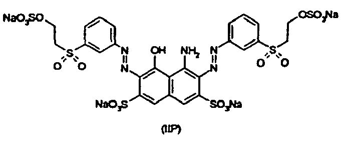 | 20 : 80 |
| | | | marineblau |
| 14 | 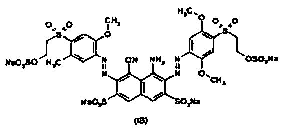 | (IIA) | 20 : 80 |
| | | | marineblau |
| 15 | (IB) | (IIB) | 50 : 50 |
| | | | grünstichig |
| | | | marineblau |
| 16 | (IB) | (IID) | 15:85 |
| | | | grünstichig |
| | | | marineblau |
| 17 | (IB) | (IIE) | 40 : 60 |
| | | | grünstichig |
| | | | marineblau |
| 18 | (IB) | (IIP) | 30 : 70 |
| | | | grünstichig |
| | | | marineblau |
| 19 | 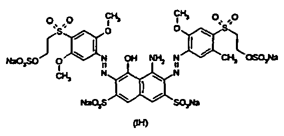 | (IIA) | 30 : 70 |
| | | | grünstichig |
| | | | marineblau |
| 20 | (IH) | (IIB) | 40 : 60 |
| | | | grünstichig |
| | | | marineblau |
| 21 | (IH) | (IIE) | 20 : 80 |
| | | | marineblau |
| 22 | (IH) | (IIP) | 25 : 75 |
| | | | grünstichig |
| | | | marineblau |
| 23 | 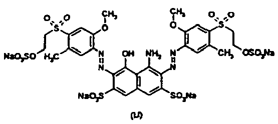 | (IIA) | 25 : 75 |
| | | | grünstichig |
| | | | marineblau |
| 24 | (IJ) | (IIB) | 20 : 80 |
| | | | grünstichig |
| | | | marineblau |
| 25 | (IJ) | (IID) | 50 : 50 |
| | | | grünstichig |
| | | | marineblau |
| 26 | (IJ) | (IIE) | 30 : 70 |
| | | | grünstichig |
| | | | marineblau |
| 27 | (IJ) | (IIP) | 35 : 65 |
| | | | grünstichig |
| | | | marineblau |
| 28 | (IAA) | (IIA) | 20 : 80 |
| | | | marineblau |
| 29 | 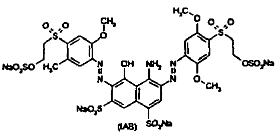 | (IIA) | 30 : 70 |
| | | | grünstichig |
| | | | marineblau |
| 30 | 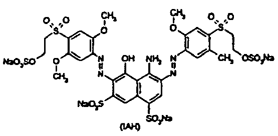 | (IIA) | 40 : 60 |
| | | | grünstichig |
| | | | marineblau |
| 31 | 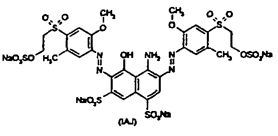 | (IIA) | 30 : 70 |
| | | | grünstichig |
| | | | marineblau |

### Farbstoff-Mischungen gemäß Beispiel 3

| Beispiel | Farbstoff gemäß der allgemeinen Formel (I) | Farbstoff gemäß der allgemeinen Formel (II) | Verhältnis (I):(II) ; Farbton |
|---|---|---|---|
| 32 | (IA) | (IID) | 20 : 80 |
| | | | grünstichig |
| | | | marineblau |
| 33 | (IA) | 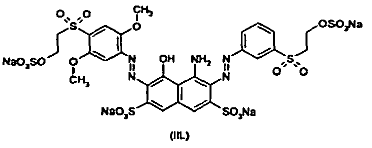 | 75 : 25 |
| | | | grünstichig |
| | | | marineblau |
| 34 | (IH) | (IID) | 35:65 |
| | | | grünstichig |
| | | | marineblau |
| 35 | (IJ) | (IIC) | 45:55 |
| | | | grünstichig |
| | | | marineblau |

### Anwendungsbeispiel

3 Teile eines gemäß Beispiel 1 - 4 erhaltenen Farbstoffs und 50 Teile Natriumchlorid werden in 999 Teilen Wasser gelöst und 5 Teile Natriumcarbonat, 1 Teil Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-60°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue bis grünstichig marineblaue Färbung mit sehr guten Echtheitseigenschaften.

## Patentansprüche

1. Reaktivfarbstoffmischung, die mindestens einen Farbstoff der allgemeinen Formel (la), 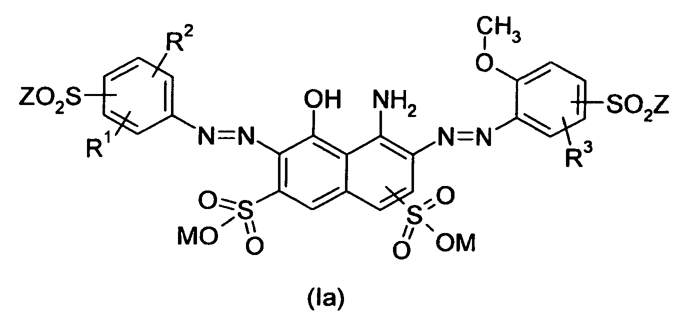 und mindestens einen Farbstoff der allgemeinen Formel (IIa) 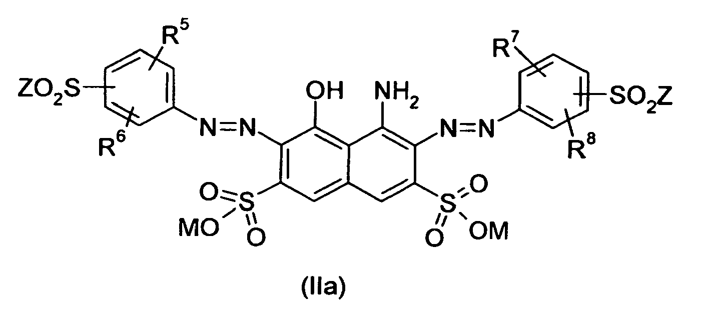 enthält, worin
R¹ bis R³ Methyl oder Methoxy;
R⁵ und R⁶ Wasserstoff, Methoxy oder Sulfo;
R⁷ und R⁸ Wasserstoff;
Z Vinyl oder β-Sulfatoethyl; und
M Wasserstoff, ein Alkalimetall oder ein Äquivalent eines Erdalkalimetalls bedeuten.

2. Reaktivfarbstoffmischung gemäß Anspruch 1, **dadurch gekennzeichnet, dass** R⁵ bis R⁸ Wasserstoff bedeuten.

3. Reaktivfarbstoffmischung gemäß Anspruch 1 und/oder 2, **dadurch gekennzeichnet, dass** sie mindestens einen Farbstoff der allgemeinen Formel (Ia) in einem Anteil von 5 bis 95 Gew.-% und mindestens einen Farbstoffe der allgemeinen Formel (IIa) in einem Anteil von 5 bis 95 Gew.-% enthält.

4. Verfahren zur Herstellung einer Reaktivfarbstoffmischung gemäß einem oder mehreren der Ansprüche 1 bis 3, **dadurch gekennzeichnet, daß** die Farbstoffe der allgemeinen Formeln (Ia) und (IIa) im vorgegebenen Verhältnis entweder in fester Form mechanisch miteinander vermischt werden oder in Form der wässrigen Lösungen gemischt werden.

5. Verwendung einer Reaktivfarbstoffmischung gemäß einem oder mehreren der Ansprüche 1 bis 3 zum Färben von hydroxy- und/oder carbonamidgruppen-haltigem Fasermaterial.

## Claims

1. A reactive dye mixture including at least one dye of the general formula (Ia) 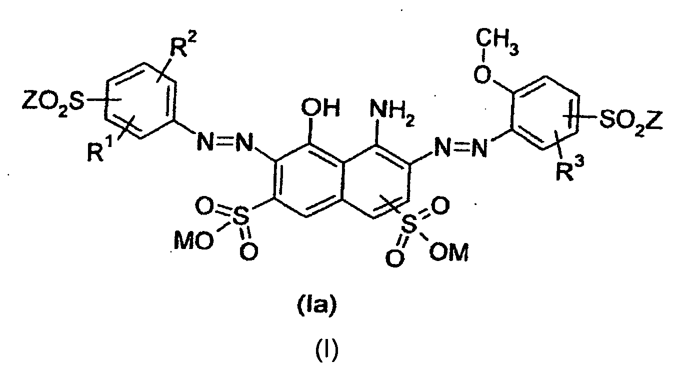 and at least one dye of the general formula (IIa) 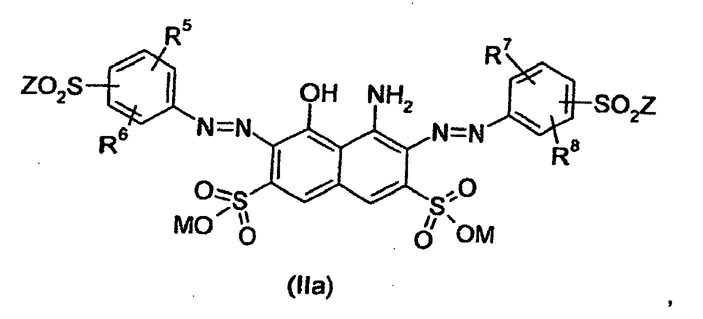 where
R¹ to R³ are each methyl or methoxy;
R⁵ and R⁶are each hydrogen, methoxy or sulfo;
R⁷ and R⁸are each hydrogen;
Z is vinyl or β-sulfatoethyl; and
M is hydrogen, an alkali metal or one equivalent of an alkaline earth metal.

2. A reactive dye mixture as claimed in claim 1, wherein R⁵ to R⁸ are each hydrogen.

3. A reactive dye mixture as claimed in claim 1 and/or 2, including at least one dye of the general formula (Ia) in a fraction of 5 to 95% by weight and at least one dye of the general formula (IIa) in a fraction of 5 to 95% by weight.

4. A process for producing a reactive dye mixture as claimed in one or more of claims 1 to 3, which comprises the dyes of the general formulae (Ia) and (IIa) being mixed with each other in the required proportions either mechanically in solid form or in the form of aqueous solutions.

5. Use of a reactive dye mixture as set forth in one or more of claims 1 to 3 for dyeing hydroxyl- and/or carboxamido-containing fiber material.

## Revendications

1. Mélange de colorants réactifs comprenant au moins un colorant de formule générale (Ia) 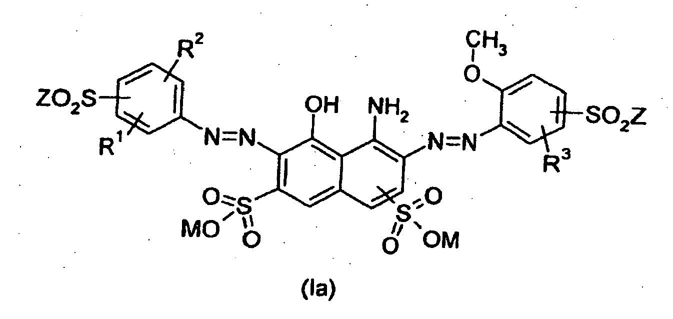 et au moins un colorant de formule générale (IIa) 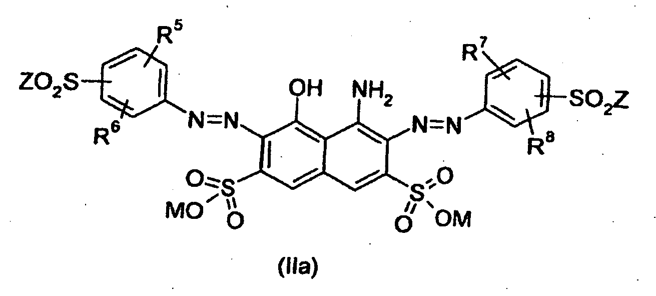 dans lesquelles
R¹ à R³ représentent un groupe méthyle ou un groupe méthoxy *;*
R⁵ et R⁶ représentent un atome d'hydrogène, un groupe méthoxy ou un groupe sulfo ;
R⁷ et R⁸ représentent un atome d'hydrogène ;
Z représente un groupe vinyle ou un groupe β-sulfatoéthyle ; et
M représente un atome d'hydrogène, un métal alcalin ou un équivalent d'un métal alcalino-terreux.

2. Mélange de colorants réactifs selon la revendication 1, **caractérisé en ce que** R⁵ à R⁸ représentent un atome d'hydrogène.

3. Mélange de colorants réactifs selon la revendication 1 et/ou 2, **caractérisé en ce qu'**il comprend au moins un colorant de formule générale (Ia) en une proportion de 5 à 95 % en poids, et au moins un colorant de formule générale (IIa) en une proportion de 5 à 95 % en poids.

4. Procédé de préparation d'un mélange de colorants réactifs selon l'une ou plusieurs des revendications 1 à 3, **caractérisé en ce que** les colorants de formules générales (Ia) et (IIa), en un rapport prédéterminé, sont mélangés ensemble mécaniquement sous la forme solide, ou sont mélangés sous la forme des solutions aqueuses.

5. Utilisation d'un mélange de colorants réactifs selon l'une ou plusieurs des revendications 1 à 3 pour la teinture d'une matière fibreuse renfermant des groupes hydroxy et/ou carboxamides.
